# EUROPEAN PATENT APPLICATION

(11) **EP 4 657 845 A1**
(43) Date of publication of application: **03.12.2025**
(21) Application number: 25174820.8
(22) Date of filing: 07.05.2025
(51) Int. Cl.: H04N 7/18, H04N 21/218, H04N 21/2187, H04N 21/242, H04N 21/8547

(54) **CENTRAL RECORDING DEVICE, DISTRIBUTED RECORDING SYSTEM AND DISTRIBUTED RECORDING METHOD**

(30) Priority: 30.05.2024 CN 202410687614
(71) Applicant: Getac Technology Corporation, New Taipei City 221009 (TW)
(72) Inventor: CHANG, Chun Kai, 11568 Taipei City (TW)
(74) Representative: Viering, Jentschura & Partner mbB Patent- und Rechtsanwälte

(57) **Abstract**

A central recording device coupled to at least one sub-recording device and comprising a recording unit, a processing unit, a storage unit and a connection unit is provided. The recording unit is configured to generate central image data. The processing unit is coupled to the recording unit and configured to: receive at least one sub-image data from the sub-recording device; perform an image synchronization process on the central image data and the sub-image data to generate streaming image data; and in response to receiving a trigger signal, retrieve a portion of the streaming image data corresponding to a specified time period to generate a streaming video. The storage unit is coupled to the processing unit and configured to store the streaming video. The connection unit is coupled between the processing unit and a server, and configured to upload the streaming image data and the streaming video to the server.

## Description

### BACKGROUND

### Technical Field

The present disclosure relates to a distributed recording technology. More particularly, the present disclosure relates to a central recording device, a distributed recording system and a distributed recording method with function of integrating data of multiple recording devices.

### Description of Related Art

As society's awareness of security has increased in recent years, in order to ensure that the situation at scene can be recorded when facing an incident, people often use recording/surveillance systems, resulting in an increasing demand for recording/surveillance systems. In order to achieve more comprehensive image recording, a distributed recording system using multiple recording devices has become the choice of many users.

However, in traditional distributed recording systems, in addition to a central host to receive image data, at least one recording device needs to be set up for observing multiple scenes. In other words, when all of the recording devices are lost or out of order, the central host will not be able to receive the image data of the recording devices, and will not be able to perform functions such as integration, output or streaming of image data. Therefore, how to overcome the malfunction of distributed recording systems due to the failure of recording devices is one aspect in this field.

### SUMMARY

A central recording device is provided in the present disclosure. The central recording device is coupled to at least one sub-recording device and comprises a recording unit, a processing unit, a storage unit and a connection unit. The recording unit is configured to generate central image data based on an environment. The processing unit is coupled to the recording unit and configured to: receive at least one sub-image data from the at least one sub-recording device; perform an image synchronization process on the central image data and the at least one sub-image data to generate streaming image data; and in response to receiving a trigger signal, retrieve a portion of the streaming image data corresponding to a specified time period to generate a streaming video. The storage unit is coupled to the processing unit and configured to store the streaming video. The connection unit is coupled between the processing unit and a server and configured to upload the streaming image data and the streaming video to the server.

A distributed recording system is provided in the present disclosure. The distributed recording system comprises at least one sub-recording device and a central recording device. The at least one sub-recording device is configured to generate at least one sub-image data based on an environment. The central recording device is coupled to the at least one sub-recording device and comprises a recording unit, a processing unit, a storage unit and a connection unit. The recording unit is configured to generate central image data based on the environment. The processing unit is coupled to the recording unit and configured to: receive the at least one sub-image data from the at least one sub-recording device; perform an image synchronization process on the central image data and the at least one sub-image data to generate streaming image data; and in response to receiving a trigger signal, retrieve a portion of the streaming image data corresponding to a specified time period to generate a streaming video. The storage unit is coupled to the processing unit and configured to store the streaming video. The connection unit is coupled between the processing unit and a server and configured to upload the streaming image data and the streaming video to the server.

A distributed recording method suitable for a distributed recording system comprising at least one sub-recording device and a central recording device is provided in the present disclosure. The distributed recording method comprises: generating, by the central recording device and the at least one sub-recording device, central image data and at least one sub-image data, respectively, based on an environment; receiving, by a processing unit of the central recording device, the at least one sub-image data from the at least one sub-recording device; performing, by the processing unit, an image synchronization process on the central image data and the at least one sub-image data, so as to generate streaming image data; in response to the processing unit receiving a trigger signal, retrieving, by the processing unit, a portion of the streaming image data corresponding to a specified time period, so as to generate a streaming video; storing, by a storage unit of the central recording device, the streaming video; and uploading, by a connection unit of the central recording device, the streaming image data and the streaming video to a server.

Through the central recording device, the distributed recording system and the distributed recording method of the present disclosure, in addition to performing image integration, streaming, uploading and other functions, the central device can also have the function of capturing images, thereby avoiding the situation in traditional distributed recording systems where the central host cannot output images due to the loss/failure of recording devices.

### BRIEF DESCRIPTION OF THE DRAWINGS

The present disclosure can be more fully understood by reading the following detailed description of the embodiment, with reference made to the accompanying drawings as follows.
Fig. 1 is a functional block diagram of a distributed recording system in accordance with some embodiments of the present disclosure.
Fig. 2 is a functional block diagram of a central recording device in accordance with some embodiments of the present disclosure.
Fig. 3 is a schematic diagram of central image data and sub-image data in accordance with some embodiments of the present disclosure.
Fig. 4 is a flowchart of a distributed recording method in accordance with some embodiments of the present disclosure.

### DETAILED DESCRIPTION

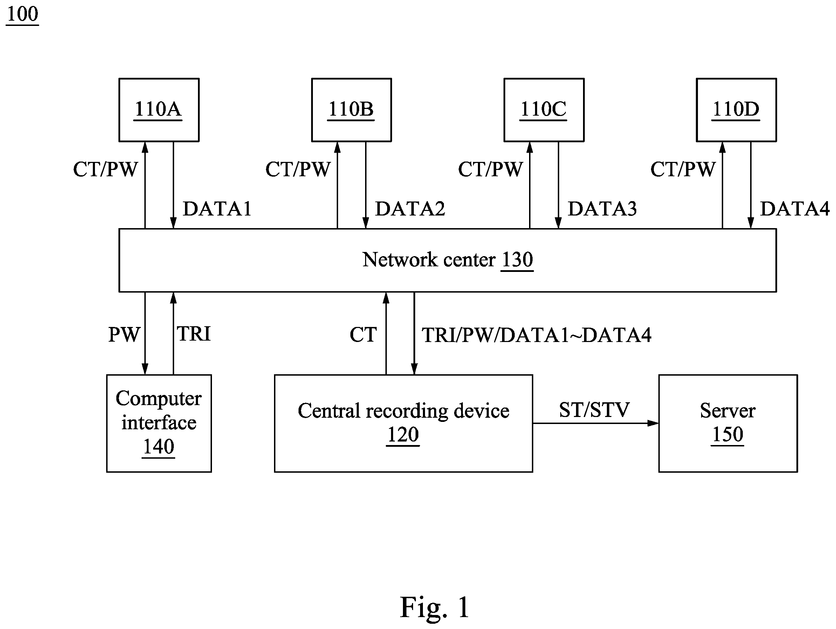

Fig. 1 is a functional block diagram of a distributed recording system 100 in accordance with some embodiments of the present disclosure. In some embodiments, the distributed recording system 100 comprises sub-recording devices 110A-110D, a central recording device 120 and a network center 130.

The sub-recording devices 110A-110D are configured to film an environment (e.g., spaces such as closed rooms, open venues, or specific objects such as safes and artworks) to generate sub-image data DATA1-DATA4 respectively. In some embodiments, each of the sub-recording devices 110A-110D can be implemented with mobile recording devices, fixed recording devices (e.g., monitors), other devices with recording functions, or a combination of the above.

In some embodiments, the sub-recording devices 110A-110D are connected to the network center 130 through a plurality of network cables respectively, so as to respectively transmit the sub-image data DATA1-DATA4 to the central recording device 120 through the network center 130 and receive an operating power PWfrom a power source (not shown) through the network center 130. Since the network cables have the function of transmitting data and power, the number of wires in the distributed recording system 100 can be reduced by using the network cables to connect the sub-recording devices 110A-110D and the network center 130 (and the central recording device 120 described below), thereby simplifying the circuit configuration of the distributed recording system 100.

It should be noted that the numbers of the sub-recording devices and the sub-image data are only examples, and are not intended to limit the present disclosure. Any number of sub-recording devices and sub-image data are within the scope of the present disclosure. In some embodiments, the distributed recording system 100 comprises more than four sub-recording devices. In some embodiments, the distributed recording system 100 comprises less than four sub-recording devices.

The central recording device 120 is coupled to the network center 130 through the network cable, and is configured to receive the sub-image data DATA1-DATA4 from the sub-recording devices 110A-110D respectively through the network center 130 and receive the operating power PW from the power source (not shown) through the network center 130. In some embodiments, the central recording device 120 is configured to transmit setting commands CT to the sub-recording devices 110A-110D, so as to adjust a recording parameter (e.g., resolution, frame rate, exposure, etc.) of the sub-recording devices 110A-110D.

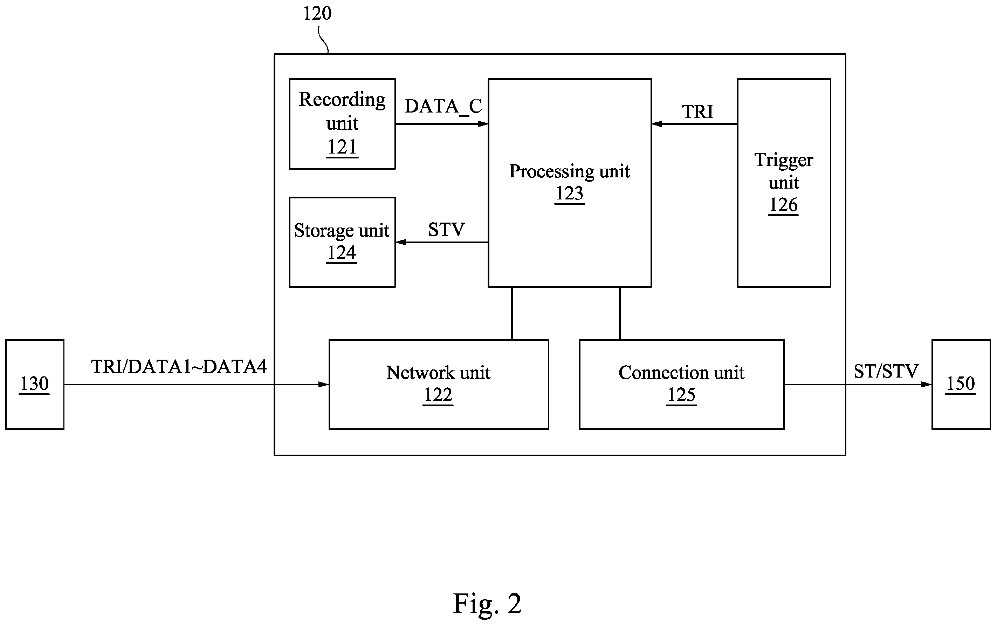

In some embodiments, the central recording device 120 is further configured to film the environment to generate a central image data DATA_C (shown in Fig. 2). In other words, compared with the center host of tradition distributed recording systems, the central recording device 120 of the distributed recording system 100 provided in the present disclosure not only has the function of receiving the sub-image data DATA1-DATA4 from the sub-recording devices 110A-110D, but also includes a function of filming the environment.

In some embodiments, the central recording device 120 is further coupled to a server 150, and is configured to upload streaming image data ST and a streaming video STV generated based on the sub-image data DATA1-DATA4 and the central image data DATA_C to the server 150 in response to receiving a trigger signal TRI. The details of the central recording device 120 generating the streaming image data ST and the streaming video STV based on the sub-image data DATA1-DATA4 and the central image data DATA_C (shown in Fig. 2) will be described in the following paragraphs.

The network center 130 is coupled to the sub-recording devices 110A-110D and the central recording device 120, and is configured to provide the transmission of the sub-image data DATA1-DATA4 and the setting commands CT between the sub-recording devices 110A-110D and the central recording device 120. In some embodiments not shown in Fig. 2, the network center 130 is coupled to a power source to provide the sub-recording devices 110A-110D and the central recording device 120 to receive the operating power PW from the power source.

In some embodiments, the distributed recording system 100 further comprises a computer interface 140. The computer interface 140 is coupled to the network center 130 through the network cables, and is configured to receive the operating power PW through the network center 130 and transmit the trigger signal TRI to the central recording device 120. In some embodiments, the computer interface 140 can be implemented with interactive web pages, software applications, other similar elements, or a combination of the above.

In some embodiments, the sub-recording devices 110A-110D, the central recording device 120, the network center 130 and the computer interface 140 are set up in the same network domain to transmit the sub-image data DATA1-DATA4, the setting commands CT and the trigger signal TRI to each other.

In order to explain the detailed internal structure and operation of the central recording device 120, please refer to Fig. 2. Fig. 2 is a functional block diagram of the central recording device 120 in accordance with some embodiments of the present disclosure.

In some embodiments, the central recording device 120 comprises a recording unit 121, a network unit 122, a processing unit 123, a storage unit 124 and a connection unit 125. The recording unit 121 is coupled to the processing unit 123, and is configured to film the environment to generate the central image data DATA_C.

The network unit 122 is coupled to the network center 130 and the processing unit 123, and is configured to provide the central recording device 120 to be connected to the network center 130 (e.g., through the network cables), thereby helping the central recording device 120 receive the sub-image data DATA1-DATA4 and the trigger signal TRI.

The processing unit 123 is coupled to the recording unit 121, the network unit 122, the storage unit 124 and the connection unit 125, and is configured to receive the central image data DATA_C from the recording unit 121, and receive the sub-image data DATA1-DATA4 and the trigger signal TRI from the network center 130 through the network unit 122. In some embodiments, the processing unit 123 is configured to perform an image synchronization process on the central image data DATA_C and the sub-image data DATA1-DATA4, so as to generate the streaming image data ST.

In some embodiments, each of the central image data DATA_C and the sub-image data DATA1-DATA4 comprises multiple pieces of time information (configured to record the time when the data was collected) and multiple pieces of display information (configured to record the image presented by the piece of data) corresponding to the multiple pieces of time information. In the image synchronization process, first, the processing unit 123 analyzes the time information and the display information of each of the central image data DATA_C and the sub-image data DATA1-DATA4.

Then, according to each piece of time information of the central image data DATA_C, the processing unit 123 selects each piece of display information of the sub-image data DATA1-DATA4 corresponding to this piece of time information. Finally, the processing unit 123 combines the display information of the central image data DATA_C and the sub-image data DATA1-DATA4 into the streaming image data ST, and outputs the streaming image data ST to the server 150 (e.g., for streaming playback).

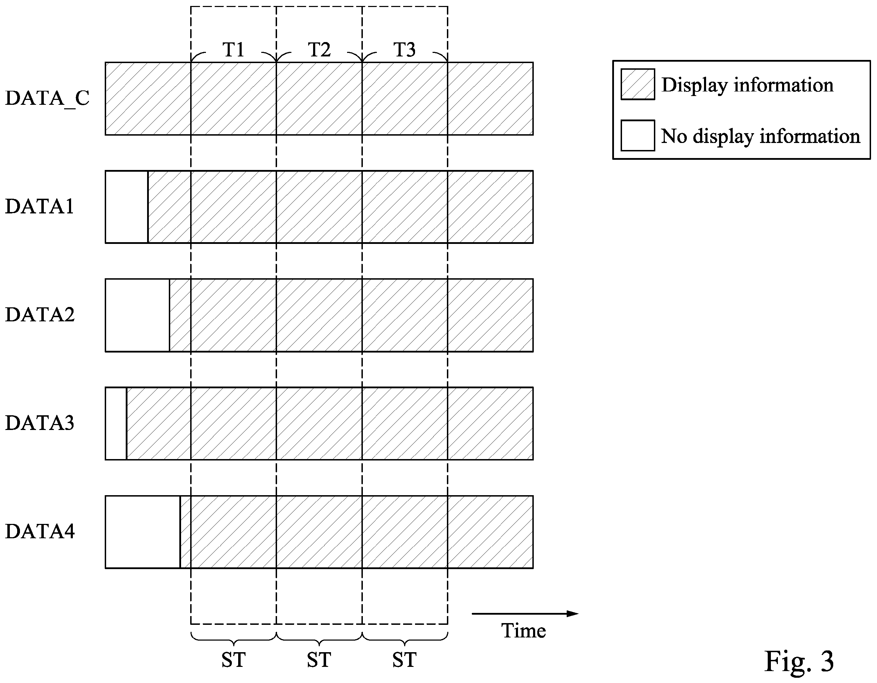

For the embodiment in Fig. 3, Fig. 3 is a schematic diagram of the central image data DATA_C and the sub-image data DATA1-DATA4 in accordance with some embodiments of the present disclosure. For the central image data DATA_C and the sub-image data DATA1-DATA4, the processing unit 123 can combine the display information corresponding to the time information T1 into a streaming image data ST and output it to the server 150, combine the display information corresponding to the time information T2 into another streaming image data ST and output it to the server 150, and combine the display information corresponding to the time information T3 into yet another streaming image data ST and output it to the server 150, and so on.

Through the above image synchronization process, the processing unit 123 can generate a continuous streaming image data ST, comprising images filmed by the central recording device 120 and the sub-recording devices 110A-110D. In addition, since each streaming image data ST is generated by combining the display information corresponding to the same time information, it can mitigate issues of image desynchronization caused by data transmission delays in the circuitry or wiring between the cameras, thereby ensuring that the images of the multiple recording devices in the output stream image data ST are synchronized.

In some embodiments, the image synchronization process is executed continuously. In other words, the processing unit 123 may continuously receive the central image data DATA_C and the sub-image data DATA1-DATA4, and continuously generate and output the streaming image data ST to the server 150 for streaming playback.

Referring to Fig. 2, the storage unit 124 is coupled to the processing unit 123. In some embodiments, in response to receiving the trigger signal TRI, the processing unit 123 may generate a streaming video STV based on the streaming image data ST (e.g., by retrieve a specified time period), and transmit the streaming video STV to the storage unit 124 and the server 150, so as to store the streaming video STV corresponding to a specified time period (e.g., 5 minutes) in the central recording device 120 (i.e., through the storage unit 124) or out of the system (i.e., through the server 150). In some embodiments, the storage unit 124 can be implemented with a dynamic random access memory (DRAM), a static random access memory (SRAM), a read only memory (ROM), other components with storage function or a combination of the above.

The connection unit 125 is coupled between the processing unit 123 and the server 150, and is configured to provide the central recording device 120 to connect to the server 150, thereby transmitting the streaming image data ST and the streaming video STV from the central recording device 120 to an external system for the streaming playback or storage of the images.

In some embodiments, the central recording device 120 further comprises a trigger unit 126. The trigger unit 126 is coupled to the processing unit 123, and is configured to generate the trigger signal TRI to the processing unit 123 in specific conditions, so as to make the central recording device 120 manually or automatically record the streaming image data ST of a specific time period. In some embodiments, the trigger unit 126 can be implemented with a button, a collision sensor, an infrared sensor, a Bluetooth signal receiver, other components with detecting/sensing functions or a combination of the above.

For example, where the trigger unit 126 is implemented with a button, when the trigger unit 126 detects a trigger action (e.g., pushing the button), the trigger unit 126 will generate the trigger signal TRI to the processing unit 123, and the processing unit 123 will capture the streaming image data ST of a specified time period (e.g., 5 minutes) after receiving the trigger signal TRI as the streaming video STV.

For another example, where the trigger unit 126 is implemented with a collision sensor, when the trigger unit 126 detects a trigger action (e.g., the central recording device 120 being hit), the trigger unit 126 will generate the trigger signal TRI to the processing unit 123, and the processing unit 123 will capture the streaming image data ST of a specified time period (e.g., 5 minutes) after receiving the trigger signal TRI as the streaming video STV.

In some embodiments, the trigger signal TRI is not only configured to instruct the processing unit 123 to generate the streaming video STV based on the streaming image data ST, but also configured to instruct the processing unit 123 to upload the streaming image data ST and the streaming video STV to the server 150, so as to stream the streaming image data ST and store the streaming video STV in an external system.

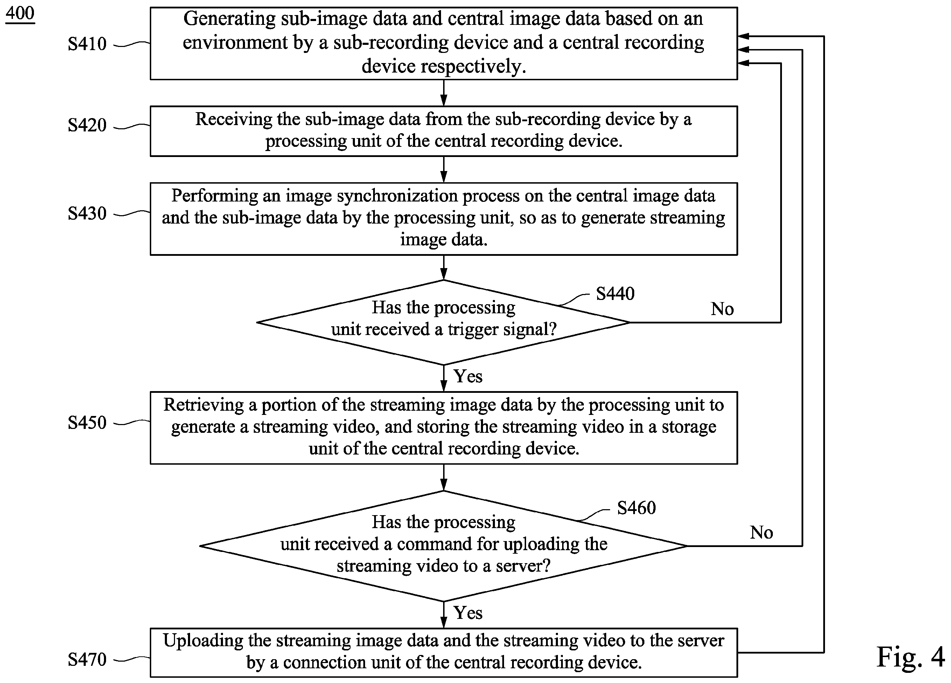

Fig. 4 is a flowchart of a distributed recording method 400 in accordance with some embodiments of the present disclosure. In some embodiments, the distributed recording method 400 comprises steps S410, S420, S430, S440, S450, S460 and S470.

The distributed recording method 400 starts from step S410. In step S410, at least one sub-image data (e.g., the sub-image data DATA1-DATA4) and central image data (e.g., the central image data DATA_C) are respectively generated by at least one sub-recording device (e.g., the sub-recording devices 110A-110D) and a central recording device (e.g., the central recording device 120) based on an environment. Next, step S420 will be performed.

In step S420, the at least one sub-image data is received by a processing unit (e.g., the processing unit 123) of the central recording device from the at least one sub-recording device. Next, step S430 will be performed.

In step S430, an image synchronization process is performed on the central image data and the at least one sub-image data by the processing unit, so as to generate streaming image data (e.g., the streaming image data ST). Next, step S440 will be performed.

In step S440, the processing unit determines whether a trigger signal (e.g., the trigger signal TRI) is received. If the processing unit determines that the trigger signal has been received, step S450 will be performed next; if the processing unit determines that the trigger signal has not been received, step S410 will be performed again.

In step S450, a portion of the streaming image data corresponding to a specified time period is retrieved by the processing unit, so as to generate a streaming video (e.g., the streaming video STV), and the streaming video is stored in a storage unit (e.g., the storage unit 124) of the central recording device.

In step S460, the processing unit determines whether a command for uploading the streaming video to a server (e.g., the server 150) is received. If the processing unit determines that the command has been received, step S470 will be performed next; if the processing unit determines that the command has not been received, then repeat step S410.

In step S470, the streaming image data and the streaming video are uploaded to the server by a connection unit (e.g., the connection unit 125) of the central recording device. After step S470, then repeat step S410.

It should be noted that the number and order of steps in the distributed recording method 400 in the present disclosure are only examples, and are not intended to limit the present disclosure. Other numbers and order of steps are within the scope of the present disclosure. In some embodiments, step S460 can be omitted, and step S470 can be performed after step S450 subsequently.

Through the central recording device, the distributed recording system and the distributed recording method of the present disclosure, the central recording device in the distributed recording system can not only have the function of integrating images from other recording devices, but also have the function of capturing images. Therefore, even if all the sub-recording devices in the distributed recording system are out of order and cannot generate images, the central recording device itself can still shoot and generate streaming images.

## Claims

1. A central recording device (120), **characterized by** being coupled to at least one sub-recording device (110A-110D), wherein the central recording device comprises:
a recording unit (121), configured to generate central image data (DATA_C) based on an environment;
a processing unit (123), coupled to the recording unit and configured to:
receive at least one sub-image data (DATA1-DATA4) from the at least one sub-recording device;
perform an image synchronization process on the central image data and the at least one sub-image data to generate streaming image data (ST); and
in response to receiving a trigger signal (TRI), retrieve a portion of the streaming image data corresponding to a specified time period to generate a streaming video (STV);
a storage unit (124), coupled to the processing unit and configured to store the streaming video; and
a connection unit (125), coupled between the processing unit and a server (150), and configured to upload the streaming image data and the streaming video to the server.

2. The central recording device of claim 1, wherein the processing unit is configured to perform the image synchronization process by:
analyzing time information (T1-T3) and display information of each of the central image data and the at least one sub-image data;
selecting at least one synchronized sub-image data from the at least one sub-image data, wherein the time information of the at least one synchronized sub-image data is same as the time information of the central image data; and
combining the display information of the central image data and the display information of the at least one synchronized sub-image data to generate the streaming image data.

3. The central recording device of claim 1, further comprising a trigger unit (126) coupled to the processing unit, wherein when the trigger unit detects a trigger action, the trigger unit is configured to generate the trigger signal to the processing unit.

4. The central recording device of claim 1, wherein the central recording device and the at least one sub-recording device are set up in a same network domain.

5. The central recording device of claim 4, wherein the central recording device and the at least one sub-recording device are coupled to a network center (130) through a plurality of network cables respectively, so as to receive an operating power (PW) through the network center, and transmit the at least one sub-image data through the plurality of network cables and the network center, wherein the network center is set up in the network domain.

6. The central recording device of claim 4, further comprising a network unit (122), wherein the network unit is coupled between the processing unit and a computer interface (140), and configured to receive the trigger signal from the computer interface, wherein the computer interface is set up in the network domain.

7. The central recording device of claim 1, wherein the processing unit is further configured to transmit a setting command (CT) to the at least one sub-recording device, so as to adjust a recording parameter of the at least one sub-recording device.

8. A distributed recording system (100), **characterized by** comprising:
at least one sub-recording device (110A-110D), configured to generate at least one sub-image data (DATA1-DATA4) based on an environment; and
a central recording device (120), coupled to the at least one sub-recording device, wherein the central recording device comprises:
a recording unit (121), configured to generate central image data (DATA_C) based on the environment;
a processing unit (123), coupled to the recording unit and configured to:
receive the at least one sub-image data from the at least one sub-recording device;
perform an image synchronization process on the central image data and the at least one sub-image data to generate streaming image data (ST); and
in response to receiving a trigger signal (TRI), retrieve a portion of the streaming image data corresponding to a specified time period to generate a streaming video (STV);
a storage unit (124), coupled to the processing unit and configured to store the streaming video; and
a connection unit (125), coupled between the processing unit and a server (150), and configured to upload the streaming image data and the streaming video to the server.

9. The distributed recording system of claim 8, wherein the processing unit is configured to perform the image synchronization process by:
analyzing time information (T1-T3) and display information of each of the central image data and the at least one sub-image data;
selecting at least one synchronized sub-image data from the at least one sub-image data, wherein the time information of the at least one synchronized sub-image data is same as the time information of the central image data; and
combining the display information of the central image data and the display information of the at least one synchronized sub-image data to generate the streaming image data.

10. The distributed recording system of claim 8, wherein the central recording device further comprises a trigger unit (126) coupled to the processing unit, wherein when the trigger unit detects a trigger action, the trigger unit is configured to generate the trigger signal to the processing unit.

11. The distributed recording system of claim 8, wherein the central recording device and the at least one sub-recording device are set up in a same network domain.

12. The distributed recording system of claim 11, further comprising a network center (130), wherein the central recording device and the at least one sub-recording device are coupled to the network center through a plurality of network cables respectively, so as to receive an operating power (PW) through the network center, and transmit the at least one sub-image data through the plurality of network cables and the network center, wherein the network center is set up in the network domain.

13. The distributed recording system of claim 11, wherein the central recording device further comprises a network unit (122) coupled between the processing unit and a computer interface (140), and the network unit is configured to receive the trigger signal from the computer interface, wherein the computer interface is set up in the network domain.

14. A distributed recording method (400), **characterized in that** the distributed recording method is performed by a distributed recording system (100) comprising at least one sub-recording device (110A-110D) and a central recording device (120), wherein the distributed recording method comprises:
(S410) generating, by the central recording device and the at least one sub-recording device, central image data (DATA_C) and at least one sub-image data (DATA1-DATA4), respectively, based on an environment;
(S420) receiving, by a processing unit (123) of the central recording device, the at least one sub-image data from the at least one sub-recording device;
(S430) performing, by the processing unit, an image synchronization process on the central image data and the at least one sub-image data, so as to generate streaming image data (ST);
(S440, S450) in response to the processing unit receiving a trigger signal (TRI), retrieving, by the processing unit, a portion of the streaming image data corresponding to a specified time period, so as to generate a streaming video (STV);
(S450) storing, by a storage unit (124) of the central recording device, the streaming video; and
(S470) uploading, by a connection unit (125) of the central recording device, the streaming image data and the streaming video to a server (150).

15. The distributed recording method of claim 14, wherein the image synchronization process comprises:
analyzing, by the processing unit, time information (T1-T3) and display information of each of the central image data and the at least one sub-image data;
selecting, by the processing unit, at least one synchronized sub-image data from the at least one sub-image data, wherein the time information of the at least one synchronized sub-image data is same as the time information of the central image data; and
combining, by the processing unit, the display information of the central image data and the display information of the at least one synchronized sub-image data, so as to generate the streaming image data.
